**Europäisches Patentamt**

**European Patent Office**

**Office européen des brevets**

(11) Publication number: **0 486 694 A1**

# EUROPEAN PATENT APPLICATION
## published in accordance with Art. 158(3) EPC

(21) Application number: **91910156.8**

(22) Date of filing: **31.05.91**

(86) International application number:
**PCT/JP91/00751**

(87) International publication number:
**WO 91/19235 (12.12.91 91/28)**

(51) Int. Cl.⁵: **G05B 13/02**

(30) Priority: **07.06.90 JP 149620/90**

(43) Date of publication of application:
**27.05.92 Bulletin 92/22**

(84) Designated Contracting States:
**DE IT SE**

(71) Applicant: **FANUC LTD.**
**3580, Shibokusa Aza-Komanba, Oshino-mura Minamitsuru-gun, Yamanashi 401-05(JP)**

(72) Inventor: **TORII, Nobutoshi**
**Fuyo Haitsu 308, 65-4, Takakuramachi Hachioji-shi, Tokyo 192(JP)**
Inventor: **NIHEI, Ryo, Fanuc Mansion Harimomi 7-210**
**3539-1, Shibokusa, Oshinomura Minamitsuru-gun, Yamanashi 401-05(JP)**
Inventor: **KATO, Tetsuaki, Fanuc Mansion Harimomi 8-101**
**3511-1, Shibokusa, Oshinomura Minamitsuru-gun, Yamanashi 401-05(JP)**

(74) Representative: **Brunner, Michael John**
**GILL JENNINGS & EVERY 53-64 Chancery Lane**
**London WC2A 1HN(GB)**

(54) **SYSTEM FOR CONTROLLING COMPLIANCE.**

(57) A system for controlling the compliance of a servo control system. The servo control system is controlled in a sliding mode (SP1, SP2, SP3), and a changing over surface (Suf) of the sliding mode control according to the deviations of the position, the velocity and the force (SP4, SP5, SP6, SP7). Thereby a servo control system whose compliance can be arbitrarily set is formed (SP8, SP9). A desired compliance is always obtained by performing the sliding mode control even if parameters of a controlled system change.

Fig. 1

Flowchart:

START

SP1 — READ Θr, Tc FROM COMMON RAM

SP2 — READ Θ, Tf FROM DSP INTERNAL REGISTER

SP3 — CALCULATE $\varepsilon, \varepsilon^{(1)}, (Tc - Tf)$

SP4 — $Suf = \varepsilon^{(1)} + C*\varepsilon + \frac{1}{K}*(Tc-Tf)$

SP5 — $Suf \geq 0$?  NO / YES

SP6 — SELECT SWITCHING INPUT $\tau1$

SP7 — SELECT SWITCHING INPUT $\tau2$

SP8 — CALCULATE INPUT

SP9 — TRANSFER INPUT TO CURRENT COMPENSATING LOOP

END

## Technical Field

The present invention relates to a compliance control method for a servo system, and more particularly to a compliance control method for controlling the servo system of a robot or the like.

## Background Art

Welding robots, coating robots, or the like which are only required to be controlled in position or path are more preferable as their rigidity is higher. However, assembling robots are not practical if they are high only in rigidity. For example, as far as screw fastening is concerned, no problem arises if the position of a screw hole and the position of a robot are kept within tolerable ranges, but such a condition is not satisfied generally. Therefore, assembling robots or the like are required to have a certain degree of flexibility.

To meet such a requirement, one process of varying rigidity as desired is a compliance control method with forces taken into account in a servo control system.

If a servo system is to be achieved by a general linear control (PI control) process, it becomes difficult to accomplish preset compliance due to changes in the characteristics of an object to be controlled. Specifically, since a servo system according to general linear control principles is based on the assumption that parameters of the object to be controlled are completely known and are not subject to change, it is difficult to apply such a servo system to an object to be controlled which suffer large parameter variations.

## Disclosure of the Invention

In view of the aforesaid drawbacks of the conventional compliance control method, it is an object of the present invention to provide a compliance control method which achieves compliance control according to a sliding mode control process that is resistant to parameter variations, disturbances, or the like.

To achieve the above object, there is provided in accordance with the present invention a compliance control method of controlling a servo control system, comprising the steps of controlling the servo control system in a sliding mode, and selecting a switching plane of the sliding mode depending on position, speed, and force errors, thereby allowing the servo control system to be set to a predetermined compliance.

Controlling the servo control system in the sliding mode allows the servo control system to have a desired compliance at all times even if it is subjected to parameter variations.

## Brief Description of the Drawings

FIG. 1 is a flowchart of a control process for a sliding mode; and
FIG. 2 is a block diagram of a hardware arrangement of a robot system which exemplifies the present invention.

## Best Mode for Carrying Out the Invention

An embodiment of the present invention will hereinafter be described with reference to the drawings.

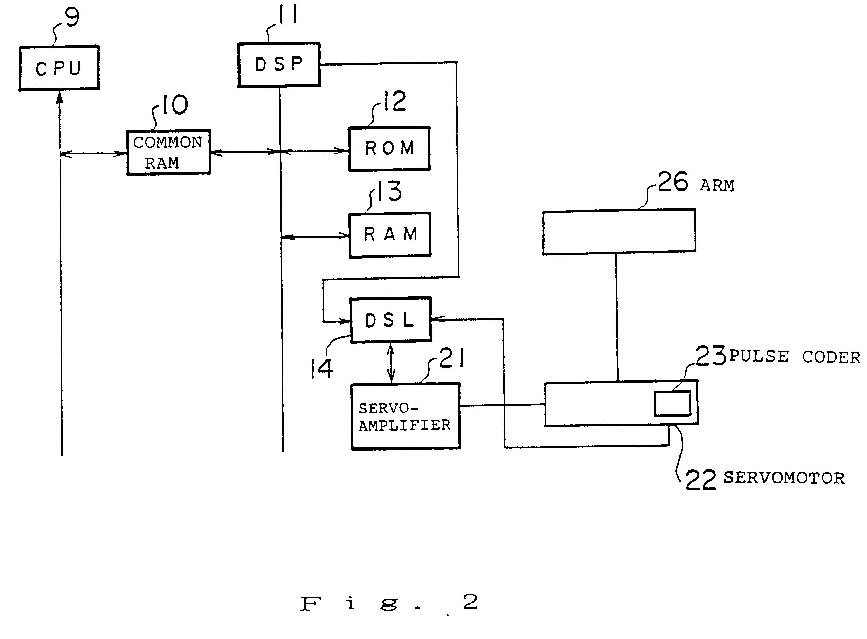

FIG. 2 shows in block form a hardware arrangement of a robot system which exemplifies the present invention. The robot system has a host processor 9 for controlling a robot in its entirety. The host processor 1 writes position commands for the robot into a common RAM 10. Various components including a ROM, a RAM, etc. coupled to the host processor 9 are omitted from illustration in FIG. 2.

The robot has a servomotor 22 that is controlled by a DSP (digital signal processor) 11. The DSP 11 reads a position command $\theta r$ from the common RAM 10 at each time interval according to a system program stored in a ROM 12.

The DSP 11 calculates a positional error $\epsilon$ representing the difference between the position command $\theta r$ and a position feedback signal $\theta$ from a pulse coder 23 associated with the servomotor 22. The DSP 11 also differentiates the position error $\epsilon$ into a speed error $\epsilon^{(1)}$. The DSP 11 further determines a torque command Tc given by a teaching operator and a feedback torque Tf from a sensor (not shown), and calculates a torque error (Tc - Tf). A sliding mode control process is effected based on the above data as described later on.

The DSP 11 also calculates an input torque T for a current compensating loop that is determined according to the sliding mode control process, generates a PWM waveform for energizing the servomotor 22, and supplies the generated PWM waveform through a DSL 14 to a servoamplifier 21.

In response to the PWM command, the servoamplifier 21 energizes the servomotor 22. The servomotor 22 actuates an arm 26 through a speed reducer.

The sliding mode control process will be described with reference to FIG. 2 which shows a robot model by way of example.

If it is assumed that

Tc: a pressing torque exerted when the robot operates in contact with an object, i.e., a command torque;

Tf: a feedback torque of the pressing force (as measured by a sensor);

$\theta$ : a robot position;

$\epsilon$ :        a position error; and

$\epsilon^{(1)}$ :        a speed error, then the plant equation can be expressed as follows:

$$J_*\theta^{(2)} + Tf = T.$$

A switching function S for the sliding mode control process is given as follows:

$$S = \epsilon^{(1)} + C_*\epsilon + (1/K)_*(Tc - Tf).$$

The input torque is expressed as follows:

$$T = A_*S + T1$$

where
     T1:        a switching input; and
     $A_*S$:      a linear input.
If a next input is given, it is possible for the switching function S to reach 0 with t (time) being ∞ (as proved later). However,

$$A = C_*Jmax$$

where
     Jmax:     the maximum inertia expected in the plant; and
     Jmin:      the minimum inertia expected in the plant.
It is then assumed that

$$T1 = K1(\epsilon) + K2(Tc,Tf) + K3(Tf^{(1)}) + K4(\theta r^{(2)})$$

where $\theta r$ is a position command.

From now on, as with the ordinary sliding mode control process,
     when S ≧ 0 (to select a switching input $\tau 1$), with respect to the term $K1(\epsilon)$,
     when $\epsilon$ > 0,

$$K1(\epsilon) = - C^2 _*Jmin_*\epsilon,$$

     when $\epsilon$ < 0,

$$K1(\epsilon) = - C^2 _*Jmax_*\epsilon,$$

and with respect to the term K2(Tc,Tf),
     when Tc - Tf ≧ 0,

$$K2(Tc,Tf) = - Jmin_*C_*(1/K)_*(Tc - Tf) + Tf,$$

     when Tc - Tf < 0,

$$K2(Tc,Tf) = - Jmax_*C_*(1/K)_*(Tc - Tf) + Tf,$$

and with respect to the term $K3(Tf^{(1)})$,
     when $Tf^{(1)}$ ≧ 0,

$$K3(Tf^{(1)}) = - Jmin_*(1/K)_*Tf^{(1)},$$

     when $Tf^{(1)}$ < 0,

$$K3(Tf^{(1)}) = - Jmax_*(1/K)_*Tf^{(1)},$$

and with respect to the term $K4(\theta r^{(2)})$,
     when $\theta r^{(2)}$ ≧ 0,
$$K4(\theta r^{(2)}) = Jmax_*\theta r^{(2)} , \text{ and}$$
     when $\theta r^{(2)}$ < 0,

$$K4(\theta r^{(2)}) = Jmin_*\theta r^{(2)} .$$

When S < 0 (to select a switching input $\tau 2$), with respect to the term $K1(\epsilon)$,
     when $\epsilon$ ≧ 0,

$$K1(\epsilon) = - C^2 _*Jmax_*\epsilon,$$

     when $\epsilon$ < 0,

$$K1(\epsilon) = - C^2 _*Jmin_*\epsilon,$$

and with respect to the term K2(Tc,Tf),
     when Tc - Tf ≧ 0,

$$K2(Tc,Tf) = - Jmax_*C_*(1/K)_*(Tc - Tf) + Tf,$$

     when Tc - Tf < 0,

$$K2(Tc,Tf) = - Jmin_*C_*(1/K)_*(Tc - Tf) + Tf,$$

and with respect to the term $K3(Tf^{(1)})$,
     when $Tf^{(1)}$ ≧ 0,

$$K3(Tf^{(1)}) = - Jmax_*(1/K)_*Tf^{(1)},$$

     when $Tf^{(1)}$ < 0,

$$K3(Tf^{(1)}) = - Jmin_*(1/K)_*Tf^{(1)},$$

and with respect to the term $K4(\theta r^{(2)})$,
     when $\theta r^{(2)}$ ≧ 0,
$$K4(\theta r^{(2)}) = Jmin_*\theta r^{(2)} , \text{ and}$$
     when $\theta r^{(2)}$ < 0,

$$K4(\theta r^{(2)}) = Jmax_*\theta r^{(2)}.$$

Now, the condition of a convergence to S = 0, i.e., the proof that there is a compliance, will be considered below. When
$\epsilon^{(1)} + C_*\epsilon + (1/K)_*(Tc - Tf) = 0$ and the robot is in contact with the object, the following equation is satisfied:

$$Tf = Tc + K_*(\epsilon^{(1)} + C_*\epsilon).$$

That is, if K is small, then the control of a force such that Tf ≒ Tc can be performed, and if K is large, the control with high spring resiliency such that Tf ≒ $K_*(\epsilon^{(1)} + C_*\epsilon)$ can be performed ($K_*C$ is a spring constant and C is a time constant).

When the robot is not in contact with the object, the robot is stabilized in equilibrium in a position satisfying:

- Tc = $K_*(\epsilon^{(1)} + C_*\epsilon)$.

If Tc = 0, then the control of a position where a force such that

$\epsilon^{(1)} + C_*\epsilon = 0$

is not controlled can be performed.

The proof that a convergence to Suf = 0 will be described below.

S = $\epsilon^{(1)} + C_*\epsilon + (1/K)_*(Tc - Tf)$     (1)

$J_*\theta^{(2)} + Tf = T$     (2)

(plant motion equations)
where
J:      the inertia of the robot (including the rotor of the servomotor);
T:      the input torque; and
θ :     the position of the robot.

$\theta r^{(2)} - \theta^{(2)} = \epsilon^{(2)}$     (3).

It is assumed that as the Liapunov's function,

V = $(S^2/2)$.

T = $A_*S + T1$     (4)

(T1: the switching input).

When both sides of the equation (1) are differentiated, the following equation is obtained:

$S^{(1)} = \epsilon^{(2)} + C_*\epsilon^{(1)} - (1/K)_*Tf^{(1)}$     (5).

Substituting the equation (3) in the equation (2), the following equation is obtained:

$\epsilon^{(2)} = \theta r^{(2)} + (Tf/J) - (T/J)$     (6).

Using the equations (4), (1), the equation (6) is modified into:

$\epsilon^{(2)} = \theta r^{(2)} + (Tf/J) - (1/J)_*\{A_*\epsilon^{(1)} + A_*C_*\epsilon + A_*(1/K)_*(Tc - Tf) + T1\}$     (7).

Substituting the equation (7) in the equation (5), the following equation is obtained:

$S^{(1)} = \{C - (A/J)\}_*\epsilon^{(1)} - (A_*C/J)_*\epsilon + \theta r^{(2)} + (Tf/J) - \{A/(J_*K)\}_*(Tc - Tf) - (T1/J) - (1/K)_*Tf^{(1)}$     (8).

Solving the equation (1) for $\epsilon^{(1)}$ and substituting the solution in the equation (8), the following equation is obtained:

$S^{(1)} = \{C - (A/J)\}_*S - C^2_*\epsilon - C_*(1/K)_*(Tc - Tf) + \theta r^{(2)} + \theta r^{(2)} + (Tf/J) - (T1/J) - (1/K)_*Tf^{(1)}$.

$S^{(1)}$ is multiplied by S as follows:

$S^{(1)}_*S = \{C - (A/J)\}_*S^2 - \{C2_*\epsilon + C_*(1/K)_*(Tc - Tf) - \theta r^{(2)} - (Tf/J) + (T1/J) + (1/K)_*Tf^{(1)}\}_*S$     (9).

An input is generated which satisfies the relationship $S_*S^{(1)} < 0$ at all times (because of $V^{(1)} = S_*S^{(1)} < 0$, V, S converge to a minimum value 0).

If it is assumed that

C - (A/J) < 0
A = $C_*Jmax$,

then the following relationship is satisfied:

$\{C - (A/J)\}_*S^2 < 0$.

By making the second term of the righthand side of the equation (9) negative, the following relationship is satisfied at all times:

$V^{(1)} = S_*S^{(1)} < 0$.

Therefore, when T1 is selected to make the the second term of the righthand side of the equation (9) negative, S converges to 0.

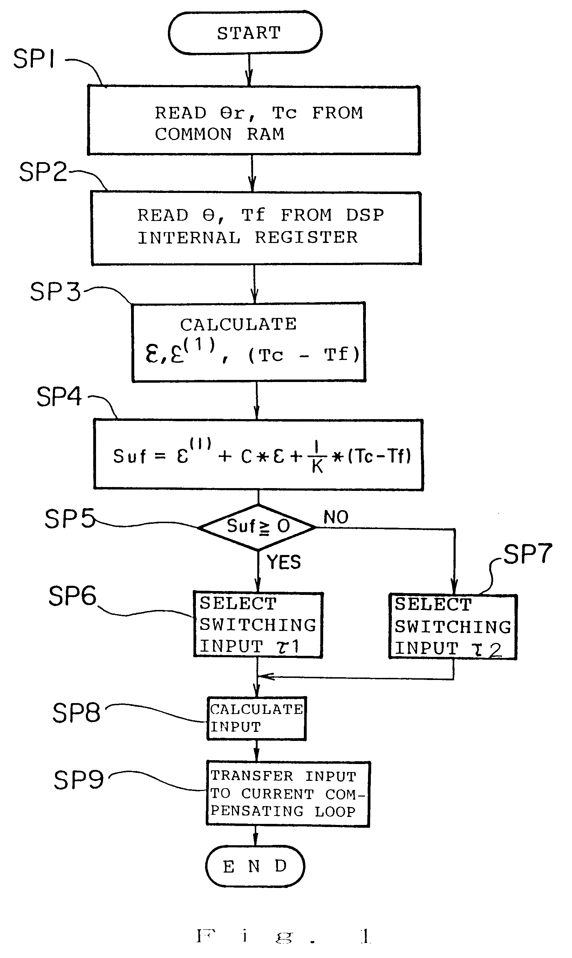

FIG. 1 is a flowchart of a control process of a sliding mode. The numerals following the letters "SP" in FIG. represent step numbers.

[SP1] A position command θr and a torque command Tc are read from the common RAM 10.

[SP2] A robot position θ and a feedback torque Tf are read from an internal register of the DSP 11.

[SP3] A position error $\epsilon$, a speed error $\epsilon^{(1)}$, and a torque error (Tc - Tf) are calculated from the above data thus read.

[SP4] A switching plane S is determined according to the following equation:

S = $\epsilon^{(1)} + C_*\epsilon + (1/K)_*(Tc - Tf)$.

[SP5] If S ≧ 0, then control goes to a step SP6, and if not, then control goes to a step SP7.

[SP6] A switching input τ1 is selected, the val-

ues of K1($\epsilon$), K2(Tc,Tf), K3(Tf$^{(1)}$), K4($\theta$r$^{(2)}$) are determined to calculate a switching input T1 as follows:

$$T1 = K1(\epsilon) + K2(Tc,Tf) + K3(Tf^{(1)}) + K4(\theta r^{(2)}).$$

[SP7] A switching input $\tau 2$ is selected, and a switching input T1 is determined in the same manner as in the step SP6.

[SP8] An input T to the servoamplifier 21 is determined according to the following equation:

$$T = A*S + T1.$$

[SP9] The input is transferred to a current compensating loop.

By thus effecting the compliance control according to the sliding mode control process, it is possible to make the compliance control stable even when the inertia or the like varies due to the attitude of the robot.

While the present invention has been described with respect to the compliance control method, the present invention is also applicable to the control of a servo system where other inertia or the like varies.

According to the present invention, an described above, the compliance control with the sliding mode control process incorporated is effected on an object which is subject to large inertia variations. The resultant system is robust enough to keep the compliance at a preset value upon inertia variations.

**Claims**

1. A compliance control method of controlling a servo control system, comprising the steps of:

controlling the servo control system in a sliding mode; and

selecting a switching plane of the sliding mode depending on position, speed, and force errors, thereby allowing the servo control system to be set to a predetermined compliance.

2. A compliance control method according to claim 1, wherein said switching plane is selected according to the equation:

$$S = \epsilon^{(1)} + C*\epsilon + (1/K)*(Tc - Tf)$$

where S is the value of the switching plane, $\epsilon^{(1)}$ is the speed error, $\epsilon$ is the position error, Tc is a torque command, and Tf is a feedback torque measured by a sensor in each articulation.

3. A compliance control method according to claim 1, wherein said servo control system comprises a servo control system of a robot.

4. A compliance control method according to claim 1, wherein said sliding mode is controlled by a digital signal processor for controlling a servo control system of a robot.

SP1 — READ $\Theta r$, Tc FROM COMMON RAM

SP2 — READ $\Theta$, Tf FROM DSP INTERNAL REGISTER

SP3 — CALCULATE $\varepsilon, \varepsilon^{(1)}$, (Tc - Tf)

SP4 — $Suf = \varepsilon^{(1)} + C * \varepsilon + \dfrac{1}{K} * (Tc - Tf)$

SP5 — $Suf \geqq 0$

NO · YES

SP6 — SELECT SWITCHING INPUT $\tau 1$

SP7 — SELECT SWITCHING INPUT $\tau 2$

SP8 — CALCULATE INPUT

SP9 — TRANSFER INPUT TO CURRENT COMPENSATING LOOP

START

E N D

Fig. 1

7

Fig. 2

# INTERNATIONAL SEARCH REPORT

International Application No PCT/JP91/00751

**I. CLASSIFICATION OF SUBJECT MATTER** (if several classification symbols apply, indicate all) [6]

According to International Patent Classification (IPC) or to both National Classification and IPC

Int. Cl[5] G05B13/02

**II. FIELDS SEARCHED**

Minimum Documentation Searched [7]

| Classification System | Classification Symbols |
|---|---|
| IPC | G05B13/02, G05D3/12 |

Documentation Searched other than Minimum Documentation
to the Extent that such Documents are Included in the Fields Searched [8]

Jitsuyo Shinan Koho      1932 - 1991
Kokai Jitsuyo Shinan Koho    1971 - 1991

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 63-301303 (Yasukawa Electric Mfg. Co., Ltd.), December 8, 1988 (08. 12. 88), (Family: none) | 1-4 |
| Y | JP, A, 2-76690 (Seiko Instruments Inc.), March 16, 1990 (16. 03. 90), (Family: none) | 1-4 |
| Y | JP, A, 60-189019 (Yasukawa Electric Mfg. Co., Ltd.), September 26, 1985 (26. 09. 85), (Family: none) | 1-4 |
| Y | JP, A, 62-40508 (Kogyo Gijutsuin-cho), February 21, 1987 (21. 02. 87), (Family: none) | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| August 19, 1991 (19. 08. 91) | September 9, 1991 (09. 09. 91) |

| International Searching Authority | Signature of Authorized Officer |
|---|---|
| Japanese Patent Office | |

Form PCT/ISA/210 (second sheet) (January 1985)